# EUROPÄISCHE PATENTSCHRIFT

(11) **EP 0 787 907 B1**
(45) Veröffentlichungstag und Bekanntmachung des Hinweises auf die Patenterteilung: **24.05.2000**
(21) Anmeldenummer: 97101263.8
(22) Anmeldetag: 28.01.1997
(51) Int. Cl.: F16B 12/50, A47B 47/00

(54) **Tragkonstruktion für ein Möbelsystem, insbesondere für ein Schrankbausystem**
Construction support for a furniture system, in particular for a cupboard construction system
Support de construction pour un système de mobilier, en particulier pour un système de construction de placards

(30) Priorität: 01.02.1996 DE 29601717 U; 04.10.1996 DE 29617286 U
(43) Veröffentlichungstag der Anmeldung: 06.08.1997
(73) Patentinhaber: Rühlig, Frank, 34277 Fuldabrück (DE)
(72) Erfinder: Rühlig, Frank, 34277 Fuldabrück (DE)
(74) Vertreter: WALTHER, WALTHER & HINZ Patentanwälte

(56) Entgegenhaltungen:
- BE-A- 628 858
- DE-U- 29 503 686
- FR-A- 1 489 468
- US-A- 3 598 433
- Balton AB, News, Neuheiten, Köln, Januar 1995

## Beschreibung

Tragkonstruktion für ein Möbelsystem, insbesondere für ein Schrankbausystem, wobei Tragelemente und von den Tragelementen getrennte Kuppelglieder vorgesehen sind, wobei das Tragelement durch eine Verbindungseinrichtung mit dem Kuppelglied klemmbar verbindbar ist, wobei das Kuppelglied Gewindebohrungen zur Aufnahme eines Schraubbolzens der mindestens einen Verbindungseinrichtung aufweist und wobei zwischen Kuppelglied und Tragelement ein Adapterstück einsetzbar ist.

Aus dem deutschen Gebrauchsmuster G 88 02 139.4 ist eine Tragkonstruktion für ein Möbelsystem bekannt, bei der Kuppelglieder in Form von Kugeln vorgesehen sind, die die einzelnen Tragelemente miteinander verbinden. Hierbei müssen, damit eine halbwegs stabile Verbindung zwischen den Tragelementen einerseits und den kugeligen Kuppelgliedern andererseits herstellbar ist, die Tragelemente stirnseitig eine entsprechend der Kugelform ausgebildete Ausnehmung aufweisen, damit die Tragelemente vollflächig an der Kugel anliegen.

Darüberhinaus ist die Herstellung der kugelförmigen Kuppelglieder relativ aufwendig und damit teuer. Weiterhin wurde festgestellt, daß sich die Tragelemente bei Einwirkung seitlich angreifender Kräfte gegenüber den Kugeln verschieben, was gewisse Stabilitätsprobleme bei der Konstruktion eines derartigen Schrankbausystems mit sich bringt.

Zum Stand der Technik gehört auch ein Möbelsystem von der Fa. Balton; hierbei ist ein zweiteiliges Kuppelglied vorgesehen, wobei die beiden rollenförmigen Teile durch eine Schraubverbindung miteinander verbunden sind. Diese Schraubverbindung stellt in axialer Richtung gleichfalls die Verbindung mit dem entsprechenden Tragelement her. Die beiden rollenförmigen Teile des Kuppelgliedes zeigen im Bereich ihrer Trennlinie umfangsverteilt Bohrungen mit Hinterschneidungen. Die auf dem Umfang des Kuppelgliedes anzubringenden Tragelemente in Form von Rohren zeigen stirnseitig herausragende Schraubenköpfe, die von den umfangsverteilt im Bereich der Trennlinie der beiden rollenförmigen Teile angeordneten Bohrungen formschlüssig aufnehmbar sind. Im Bereich der Verbindung des stangenförmigen Tragelementes zu dem Kuppelglied besitzt das Tragelement stirnseitig ein Ansatzelement, damit das Tragelement vollflächig an dem Kuppelglied anliegt.

Aus der BE-A-628 858 ergibt sich ein Möbelsystem, bei dem die Kuppelglieder würfelartig ausgebildet sind. Darüber hinaus weisen diese Kuppelglieder an ihren Außenflächen Nuten auf, in denen entsprechend ausgebildete Adapterstücke eingreifen. Dies ganz offensichtlich, um ein Verdrehen der Adapterstücke relativ zu dem Kuppelglied zu vermeiden.

Die Herstellung solcher würfelartiger Kuppelglieder ist relativ aufwendig, da eine jede Fläche dieser Kuppelglieder einzeln bearbeitet wird. Hinzu kommt die Ausbildung der Nuten auf den Kuppelgliedern, die in jedem Fall einen gesonderten Arbeitsgang erforderlich machen.

Der Erfindung liegt daher die Aufgabe zugrunde, eine Tragkonstruktion der eingangs genannten Art bereitzustellen, die preiswerter in der Herstellung ist als dies beim Stand der Technik möglich ist, und die dennoch eine hohe Eigenstabilität aufweist.

Die Aufgabe wird erfindungsgemäß dadurch gelöst, daß das Kuppelglied rollenförmig ausgebildet ist, und daß das Adapterstück an seinem einen, dem Kuppelglied zugewandten Ende kreissegmentartig derart ausgebildet ist, daß es vollflächig an dem Kuppelglied anliegt.

Rollenförmig ausgebildete Kuppelglieder lassen sich einfach herstellen, denn schlussendlich sind im Querschnitt runde Strangpressprofile als Meterware erhältlich, die dann lediglich auf Länge abgeschnitten und mit einem entsprechenden Gewinde versehen werden müssen. Die Adapterstücke selbst können, da sie formenmäßig einfach ausgebildet sind, als Presslinge hergestellt werden, was ebenfalls relativ preiswert durchführbar ist.

An seinem anderen Ende ist das Adapterstück im Bereich der Wandung des Tragelementes, also im Randbereich, vorteilhaft eben ausgebildet, so daß das stirnseitige Ende des Tragelementes ebenfalls an dem Adapterstück plan anliegt. Zur Befestigung des Adapterstückes an dem Tragelement ist weiterhin vorgesehen, daß das Adapterstück ein winkliges Paßstück aufweist, und das Tragelement einen korrespondierend zu dem Paßstück ausgebildeten inneren, mehreckigen Querschnitt aufweist, so daß das Paßstück von dem Tragelement formschlüssig aufnehmbar ist. Hierdurch wird erreicht, daß das Adapterstück immer paßgenau zum Kuppelglied anordbar ist, was beispielsweise nicht der Fall wäre, wenn das Tragelement eine runde Aussparung und korrespondierend hierzu das Adapterstück ebenfalls ein rundes, hülsenförmiges Paßstück aufweisen würde. Weiterhin weist bei der ersten Ausführungsform das Kuppelglied zwei in einer Ebene liegende kreuzweise angeordnete Gewindebohrungen auf, wobei eine dritte Gewindebohrung zentrisch zur Rotationsachse des rollenförmigen Kuppelgliedes vorgesehen ist.

Hierdurch wird eine hohe Variabilität des Möbelsystems erreicht, denn derartige Kuppelglieder können bis zu sechs Tragelemente aufnehmen.

Zur klemmbaren Verbindung des Kuppelgliedes mit dem Tragelement ist eine Verbindungseinrichtung vorgesehen, die zwei verschieblich gegeneinander gelagerte Hülsen umfaßt, wobei die Hülsen einen Schraubbolzen aufnehmen, der durch die Hülsen hindurch bis in das Kuppelglied hineinragt und mit diesem verschraubbar ist, wobei durch den Schraubbolzen die Hülsen derart gegeneinander verschieblich sind, daß sie klemmend an dem inneren Querschnitt des Tragelementes anliegen. Das heißt, die Bohrung in den Hülsen ist im Durchmesser größer als der Durchmesser des Schraubenschaftes. Damit die beiden Hülsen sich gegeneinander verschieben können, um die entsprechende Klemmwirkung erzeugen zu können, sind die beiden insbesondere viereckigen Hülsen mit jeweils einer schrägen Gleitfläche versehen, mit der sie aneinander anliegen. Das heißt, die Verbindung erfolgt dadurch, daß durch die Hülsen hindurch eine Schraube gesteckt wird, die bis in die Gewindebohrung des Kuppelgliedes hineinragt,wobei dann die Schraube derart angezogen wird, daß die beiden Hülsen sich gegeneinander derart verschieben, daß sie an dem ebenfalls viereckigen Umfang des Tragelementes klemmend anliegen. Hierdurch wird eine sehr stabile Verbindung zwischen den einzelnen Tragelementen durch die Kuppelglieder hindurch bewirkt, die den Aufbau eines Schrankbau- oder Regalsystems mit großen Spannweiten ermöglichen.

Der Erhöhung der Stabilität dient auch die Maßnahme, die Tragelemente auf ihrem Umfang mit mindestens einer parallel zur Längsachse verlaufenden Nut zur formschlüssigen Aufnahme der plattenförmigen Boden- oder Wandelemente zu versehen. Durch die formschlüssige Aufnahme der Boden- und Wandelemente durch die Tragelemente wird erreicht, daß insbesondere die Bodenelemente höher belastbar sind, als dies der Fall ist, wenn die Böden nur klemmend von den Tragelementen aufnehmbar wären. Vertikal derart eingesetzte Wände erhöhen die Stabilität bei seitlicher Belastung.

Anhand der Zeichnungen wird die Erfindung nachstehend beispielhaft näher erläutert.
- Figur 1: zeigt die Verbindung von drei Tragelementen durch ein Kuppelglied;

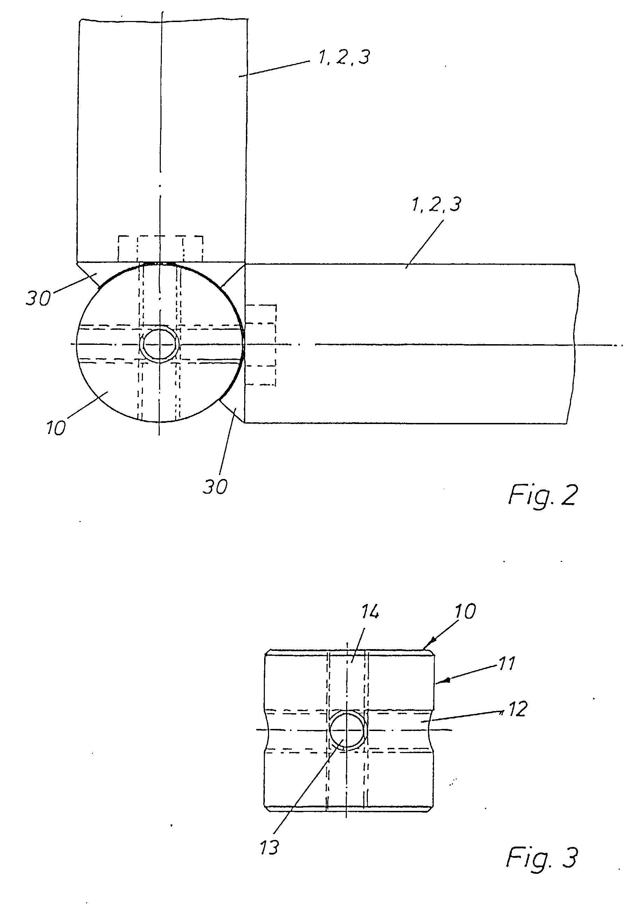

- Figur 2: zeigt eine Draufsicht auf ein rollenförmiges Kuppelglied zur Verbindung von zwei sich kreuzenden Tragelementen;
- Figur 3: zeigt das Kuppelglied in einer Seitenansicht;
- Figur 4: zeigt das Tragelement mit parallel zur Längsachse verlaufenden Nuten;
- Figur 5: zeigt das Adapterstück in einer Seitenansicht;
- Figur 6: zeigt das Adapterstück gemäß Figur 5 um 90° gedreht;
- Figur 7: zeigt das Adapterstück in einer Draufsicht;
- Figur 8: zeigt schematisch die Verbindung des Tragelementes mit dem Kuppelglied durch die Verbindungseinrichtung;

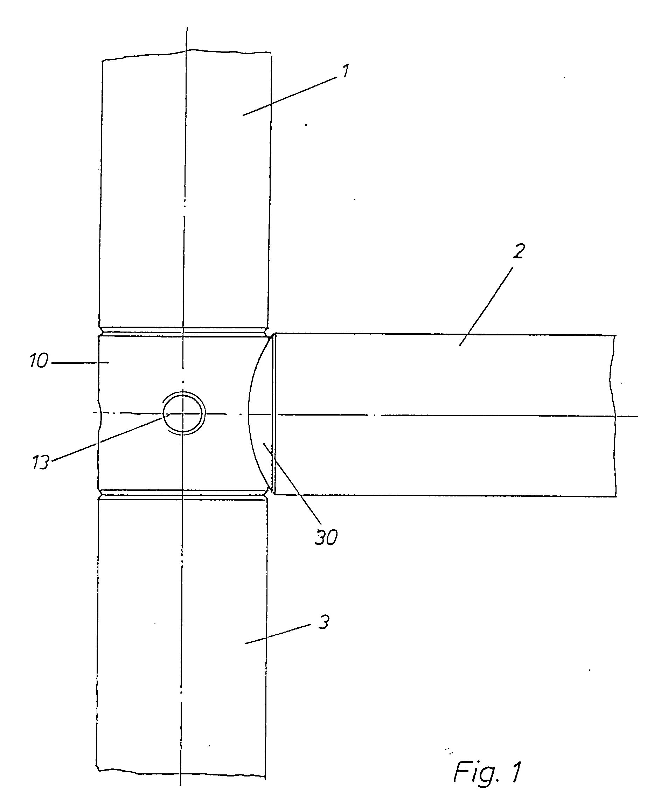

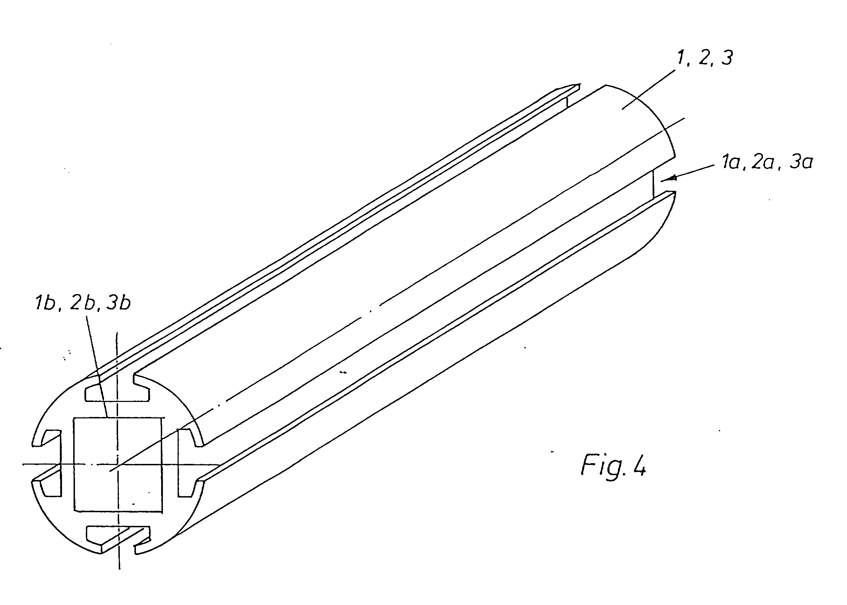

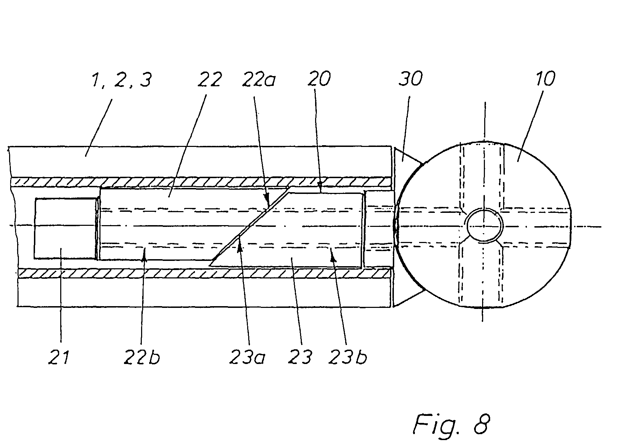

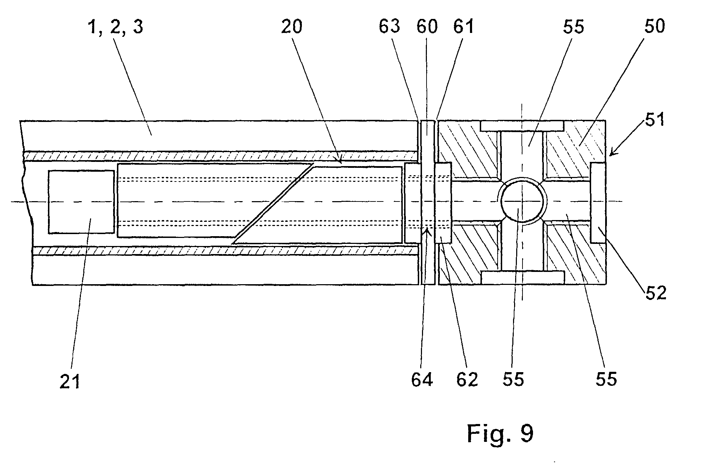

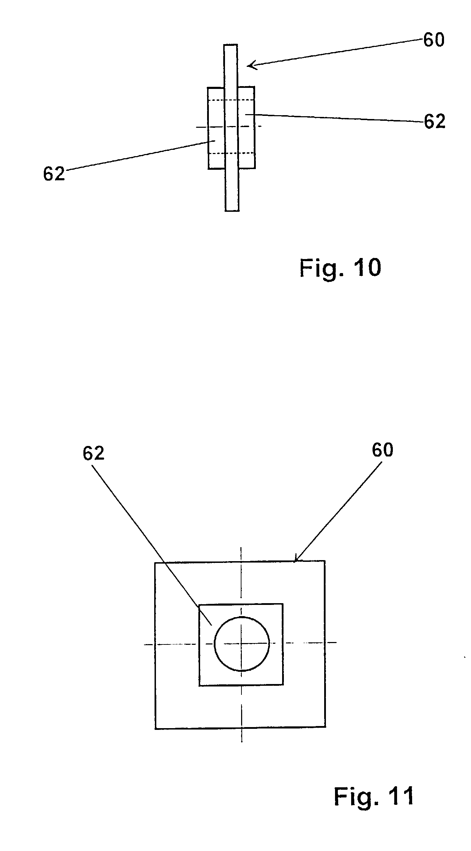

Gemäß Figur 1 und 8 sind die Tragelemente mit 1, 2 und 3 bezeichnet. Verbunden sind die Tragelemente 1, 2, 3 im Kreuzungsbereich durch das Kuppelglied 10. Das Kuppelglied 10, das rollen- oder walzenförmig ausgebildet ist, besitzt auf seinem zylindrischen Umfang 11 zwei sich in einem Punkt kreuzende Bohrungen 12 und 13; darüber hinaus weist das rollenförmig ausgebildete Kuppelglied 10 eine parallel zur Mittellängsachse verlaufende zentrische Bohrung 14 auf (Figur 3). Diese Bohrungen 12, 13 und 14 dienen der Aufnahme von Schraubbolzen 21, als Bestandteil einer insgesamt mit 20 bezeichneten Verbindungseinrichtung.

Diese Verbindungseinrichtung 20 (Figur 8) besitzt weiterhin die beiden viereckigen Hülsen 22 und 23, die jeweils eine schräge Anlagefläche 22a und 23a besitzen, mit denen sie aneinander anliegen. Darüber hinaus sind die Hülsen mit einer zentrischen Bohrung 22b beziehungsweise 23b versehen, die derart dimensioniert ist, daß beim Einschrauben des Schraubbolzens 21 in das zylindrische Kuppelglied 10 die Hülsen 22 und 23 sich soweit relativ zueinander verschieben, daß diese klemmend an der Innenwandung des entsprechend der Außenkontur der Hülsen ausgebildeten Tragelemente anliegen.

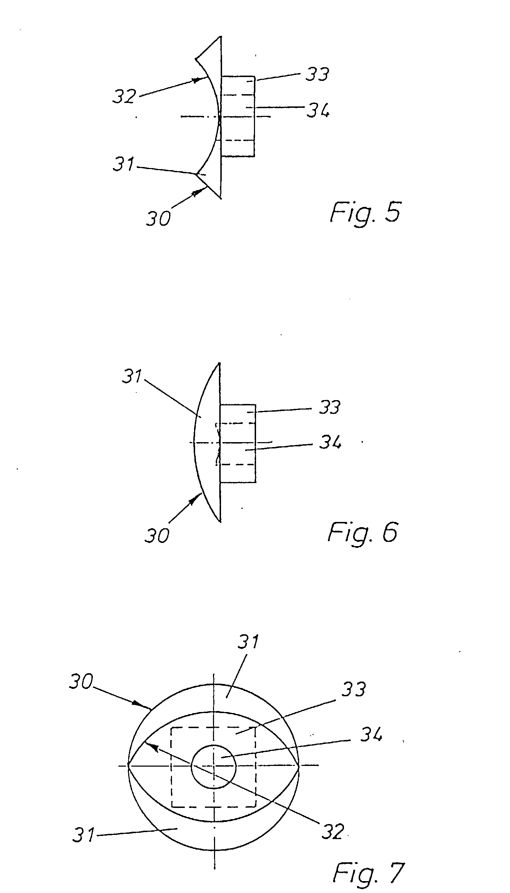

Bei Anschluß der Tragelemente 1, 2 und 3 am Umfang des rollenförmig ausgebildeten Kuppelgliedes 10 ist ein Adapterstück 30 vorgesehen (Figur 5 bis Figur 7). Dieses Adapterstück 30 besitzt einen Kopf 31, der korrespondierend zu dem Durchmesser des rollenförmigen Kuppelgliedes eine entsprechende kreisförmige Ausnehmung 32 aufweist, so daß der Kopf dieses Adapterstückes vollflächig am Umfang des zylindrischen beziehungsweise rollenförmig ausgebildeten Kuppelgliedes anliegt.

Darüber hinaus besitzt das Adapterstück 30 ein Paßstück 33, das als Vierkant ausgebildet ist und in den Abmessungen dem inneren vierkantartigen Querschnitt des Tragelementes 1, 2, 3 entspricht. Das heißt, daß das Paßstück und mithin das Adapterstück undrehbar von dem Tragelement 1, 2, 3 aufnehmbar sind.

Durch die Ausrichtung dieses Paßstückes in bezug auf die kreisförmige Ausnehmung 32 im Kopf 31 des Adapterstückes 30 wird gewährleistet, daß nach Aufnahme des Paßstückes 33 durch das Tragelement 1, 2, 3 mit seinem auf dem Umfang angeordneten, parallel zur Längsachse verlaufenden Nuten das Tragelement immer in einem Winkel derart zu den übrigen Tragelementen angeordnet werden kann, daß die entsprechenden Nuten der entsprechend gegenüberliegend in der Tragkonstruktion angeordneten Tragelemente parallel zueinander liegen, so daß die entsprechenden Boden- und Wandelemente aufnehmbar sind.

Das heißt, daß durch die vierkantförmige Ausbildung des Paßstückes in Verbindung mit der korrespondierend hierzu ausgebildeten Ausnehmung im Tragelement, die Position der einzelnen Tragelemente hinsichtlich der Anordnung der Nuten zur Aufnahme der Wand- und Deckenelemente vorbestimmbar ist.

Darüber hinaus weist das Adapterstück 30 die Bohrung 34 für den Schraubbolzen 21 auf.

Die Ausbildung der Tragelemente 1, 2, 3 ergibt sich im einzelnen aus Figur 4; aus Figur 4 ist der Verlauf der jeweils im rechten Winkel zueinander parallel zur Längsachse im Tragelement angeordneten Nuten 1a, 2a, 3a zur Aufnahme der entsprechenden Wand- und Bodenelemente erkennbar, die nicht dargestellt sind. Darüber hinaus ist aus dieser räumlichen Darstellung des Tragelementes die vierkantförmige Ausbildung des inneren Querschnittes 1b, 2b, 3b ersichtlich, der, wie bereits ausgeführt, zur Aufnahme des Paßstückes 33 des Adapterstückes 30 dient.

## Patentansprüche

1. Tragkonstruktion für ein Möbelsystem, insbesondere für ein Schrankbausystem, wobei Tragelemente (1, 2, 3) und von den Tragelementen getrennte Kuppelglieder (10) vorgesehen sind, wobei das Tragelement (1, 2, 3) durch eine Verbindungseinrichtung (20) mit dem Kuppelglied (10) klemmbar verbindbar ist, und wobei das Kuppelglied Gewindebohrungen zur Aufnahme eines Schraubbolzens der mindestens einen Verbindungseinrichtung aufweist, wobei zwischen Kuppelglied (10) und Tragelement (1, 2, 3) ein Adapterstück einsetzbar ist,
**dadurch gekennzeichnet,**
dass das Kuppelglied (10) rollenförmig ausgebildet ist und die Gewindebohrungen (12, 13) als Durchgangsbohrungen durch das Kuppelglied (10) verlaufen und sich in einem Punkt Kreuzen und dass das Adapterstück (30) an seinem einen, dem Kuppelglied zugewandten Ende im Querschnitt kreissegmentartig derart ausgebildet ist, dass es im montierten Zustand vollflächig an dem Kuppelglied anliegt.

2. Tragkonstruktion nach Anspruch 1,
**dadurch gekennzeichnet,** daß
das Adapterstück (30) an seinem anderen Ende im Randbereich derart plan ausgebildet ist, daß das Adapterstück am stirnseitigen Ende des Tragelementes (1, 2, 3) plan anliegt.

3. Tragkonstruktion nach einem oder mehreren der voranstehenden Ansprüche,
**dadurch gekennzeichnet,** daß
das Adapterstück (30) ein im Querschnitt winkliges Paßstück (33) aufweist, daß das Tragelement (1, 2, 3) einen korrespondierend zum Paßstück (33) ausgebildeten inneren, mehreckigen Querschnitt (1b, 2b, 3b) aufweist, so daß das Paßstück (33) von dem Tragelement (1, 2, 3) formschlüssig aufnehmbar ist.

4. Tragkonstruktion nach Anspruch 1,
**dadurch gekennzeichnet,** daß
das Kuppelglied (10) zwei in einer Ebene liegende, kreuzweise angeordnete Gewindebohrungen (12, 13) aufweist, und wobei eine dritte Gewindebohrung (14) zentrisch zur Rotationsachse des rollenförmig ausgebildeten Kuppelgliedes (10) vorgesehen ist.

5. Tragkonstruktion nach Anspruch 1,
**dadurch gekennzeichnet,** daß
der Durchmesser des rollenförmigen Kuppelgliedes (10) etwa dem Durchmesser des Tragelementes (1, 2, 3) entspricht.

6. Tragkonstruktion nach einem der voranstehenden Ansprüche,
**dadurch gekennzeichnet,** daß
die Tragelemente (1, 2, 3) auf dem Umfang mindestens eine parallel zur Längsachse verlaufende Nut (1a, 2a, 3a) zur formschlüssigen Aufnahme von plattenförmigen Boden- oder Wandelementen aufweisen.

7. Tragkonstruktion nach einem oder mehreren der voranstehenden Ansprüche,
**dadurch gekennzeichnet,** daß
zur klemmbaren Verbindung des Kuppelgliedes (10) mit dem Tragelement (1, 2, 3) die Verbindungseinrichtung (20) zwei verschieblich gegeneinander gelagerte Hülsen (22, 23) umfaßt, wobei die Hülsen (22, 23) einen Schraubbolzen (21) aufnehmen, der durch die Hülsen (22, 23) hindurch bis in das Kuppelglied (10) hineinragt, und mit diesem verschraubbar ist, und wobei durch den Schraubbolzen (21) die Hülsen (22, 23) derart gegeneinander verschieblich sind, daß sie klemmend an dem inneren Querschnitt (1b, 2b, 3b) des Tragelementes (1, 2,3) anliegen.

8. Tragkonstruktion nach Anspruch 7,
**dadurch gekennzeichnet,** daß
die beiden Hülsen (22, 23) mit jeweils einer schrägen Gleitfläche (22a, 23a) aneinander anliegen.

## Claims

1. Supporting structure for a furniture system, in particular for a cabinet construction system, supporting elements (1, 2, 3) and coupling members (10) separated from said supporting elements being provided, whereas the supporting element (1, 2, 3) may be connected with the coupling member (10) by clamping with the help of a connecting device (20) and whereas the coupling member is provided with threaded holes receiving a screw bolt of the at least one connecting device and whereas an adapter may be inserted between the coupling member (10) and the supporting element (1,2, 3),
**characterized in that** the coupling member (10) has got a trochoid shape, that the threaded holes (12, 13) extend as through holes through the coupling member (10) and cross each other at one point and that the end of the adapter (30) facing the coupling member is of a section having the shape of a segment of a circle in such a way that, when mounted, it sits close to the coupling member over its whole surface.

2. Supporting structure according to claim 1,
**characterized in that** the other end of the adapter (30) has a flat edge area, so that the adapter sits close to and even with the front end of the supporting element (1, 2, 3).

3. Supporting structure according to one or several of the previous claims,
**characterized in that** the adapter (30) is provided with a fitting piece (33) of angular section, that the supporting element (1, 2, 3) is provided with an inner, polygonal section (1b, 2b, 3b) corresponding to the fitting piece (33), so that the fitting piece (33) may be received form-fittingly by the supporting element (1, 2, 3).

4. Supporting structure according to claim 1,
**characterized in that** the coupling member (10) is provided with two threaded holes (12, 13) accommodated crosswise on one plane and whereas a third threaded hole (14) is provided centrically to the rotational axis of the trochoid coupling member (10).

5. Supporting structure according to claim 1,
**characterized in that** the diameter of the trochoid coupling member (10) approximately corresponds to the diameter of the supporting element (1, 2, 3).

6. Supporting structure according to one of the previous claims,
**characterized in that** the supporting elements (1, 2, 3) are provided on their circumference with at least one groove (1a, 2a, 3a) running parallel to the longitudinal axis and receiving form-fittingly bottom or wall elements of the shape of a board.

7. Supporting structure according to one or several of the previous claims,
**characterized in that,** for the clamping connection of the coupling member (10) with the supporting element (1, 2, 3), the connecting device (20) is provided with two sheaths (22, 23) arranged so as to be slidable against one another, whereas the sheaths (22, 23) receive a screw bolt (21) which extends through the sheaths (22, 23) into the coupling member (10) and which may be screwed with said coupling member, and whereas, due to the screw bolt, the sheaths (22, 23) are slidable against each other in such a way that they sit close to the inner section (1b, 2b, 3b) of the supporting element (1, 2, 3) in a clamping arrangement.

8. Supporting structure according to claim 7,
**characterized in that** the two sheaths (22,23) are adjacent by a slant sliding surface (22a, 23a) provided on either sheath.

## Revendications

1. Structure porteuse pour un système de meubles, en particulier pour un système de construction pour placards, pourvue d'éléments porteurs (1, 2, 3) et d'organes de couplage (10) séparés des éléments porteurs, l'élément porteur (1, 2, 3) pouvant être rattaché par serrage à l'organe de couplage (10) au moyen d'un dispositif d'assemblage (20), l'organe de couplage étant pourvu de trous filetés destinés à recevoir un boulon fileté appartenant à au moins un dispositif d'assemblage, une pièce d'adaptation pouvant être insérée entre l'organe de couplage (10) et l'élément porteur (1, 2, 3),
**caractérisée en ce que** l'organe de couplage (10) a une forme de rouleau, que les trous filetés (12, 13) traversent l'organe de couplage (10) en tant que trous de passage et qu'ils se croisent en un point, et que l'extrémité de la pièce d'adaptation (30) qui fait face à l'organe de couplage a une forme de segment circulaire qui lui permet d'épouser l'organe de couplage sur toute sa surface une fois assemblée.

2. Structure de support selon la revendication 1,
**caractérisée en ce que**, sur le bord, l'autre extrémité de la pièce d'adaptation (30) est plane de sorte que la pièce d'adaptation vient à reposer de façon plane contre l'extrémité frontale de l'élément porteur (1, 2, 3).

3. Structure de support selon une ou plusieurs des revendications précédentes,
**caractérisée en ce que** la pièce d'adaptation (30) est pourvue d'un raccord (33) de section angulaire et que l'élément porteur (1, 2, 3) est pourvu d'une section interne polygonale (1b, 2b, 3b) correspondant au raccord (33), de sorte que le raccord (33) peut être reçu par l'élément porteur (1, 2, 3) de façon à former une liaison rigide.

4. Structure de support selon la revendication 1,
**caractérisée en ce que** l'organe de couplage (10) est pourvu de deux trous filetés (12, 13) disposés en croix sur une ligne, un troisième trou fileté (14) étant prévu centralement par rapport à l'axe de rotation de l'organe de couplage (10) en forme de rouleau.

5. Structure de support selon la revendication 1,
**caractérisée en ce que** le diamètre de l'organe de couplage (10) en forme de rouleau correspond approximativement au diamètre de l'élément porteur (1, 2, 3).

6. Structure de support selon l'une des revendications précédentes,
**caractérisée en ce que** les éléments porteurs (1, 2, 3) sont pourvus sur leur circonférence d'au moins une rainure (1a, 2a, 3a) aménagée parallèlement à l'axe longitudinal et destinée à recevoir les éléments de sol et les éléments muraux de façon rigide.

7. Structure de support selon l'une des revendications précédentes,
**caractérisée en ce que** le dispositif d'assemblage (20) destiné à l'assemblage par serrage de l'organe de couplage (10) avec l'élément porteur (1, 2, 3) comprend deux gaines (22, 23) disposées de façon à pouvoir être déportées l'une par rapport à l'autre, les gaines (22, 23) recevant un boulon fileté (21) qui les traverse et qui s'étend jusque dans l'organe de couplage (10) avec lequel il peut être vissé, le boulon fileté (21) permettant aux gaines (22, 23) de se déplacer l'une par rapport à l'autre de telle sorte qu'elles se trouvent serrées contre la section interne (1b, 2b, 3b) de l'élément porteur (1, 2, 3).

8. Structure de support selon la revendication 7,
**caractérisée en ce que** les deux gaines (22, 23) sont adjacentes par une surface de glissement oblique (22a, 23a) dont elles sont chacune pourvues.
